# EUROPEAN PATENT APPLICATION

(11) **EP 2 778 473 A1**
(43) Date of publication of application: **17.09.2014**
(21) Application number: 13159269.3
(22) Date of filing: 14.03.2013
(51) Int. Cl.: F16H 21/18

(54) **A transmission mechanism**

(71) Applicant: Sol Beheer B.V., 1769 HD Haringhuizen (NL)
(72) Inventor: Hoos, Frank, 3271 AH Mijnsheerenland (NL)
(74) Representative: De Vries & Metman

(57) **Abstract**

A transmission mechanism (1) comprises a rotating shaft (2) having an axis of rotation (3), a reciprocating member (4), which is displaceable with respect to the axis of rotation (3), a ring (9) which is rotatably mounted to the rotating shaft (2) and rotatable about a ring axis (11) extending parallel to the axis of rotation (3), a first rod (22) which is pivotally coupled to the reciprocating member (4) at a first reciprocating member pivot axis (28) and to the ring (9) at a first ring pivot axis (18), and a second rod (23) which is pivotally coupled to the reciprocating member (4) at a second reciprocating member pivot axis (29) and to the ring (9) at a second ring pivot axis (19). A circular member (7) is attached to the rotating shaft (2) and located eccentrically with respect to the axis of rotation (3). The ring (9) is rotatably mounted about the circular member (7) such that the centre line of the circular member (7) coincides with the ring axis (11), and wherein the outer circumference of the circular member (7) extends beyond the outer circumference of the rotating shaft (2) in at least one direction of the axis of rotation (3).

## Description

The present invention pertains to a transmission mechanism which comprises a rotating shaft and a reciprocating member. The transmission can be used for converting a reciprocating motion of the reciprocating member into a unidirectional rotating motion of the rotating shaft or vice versa.

Such a transmission mechanism is known in the art, for example a conventional mechanism having a piston and a crankshaft which are coupled by means of a connecting rod.

It is an object of the present invention to provide an efficient transmission mechanism.

This is achieved by the transmission mechanism according to claim 1.

Due to the eccentrical position of the ring axis with respect to the axis of rotation and the structure of the mechanism, the first and second ring pivot axes will each rotate in the same direction as the rotating shaft about respective virtual axes extending parallel to the ring axis. This means that the first and second ring pivot axes move transversely with respect to the axial direction synchronously. Due to the orientation of the first and second rods, transverse forces at the respective first and second reciprocating member pivot axes can be directed opposite to each other under operating conditions. Consequently, the resulting transverse force of the reciprocating member on the environment, for example in case it is used as a sliding piston in a cylinder, the side forces can be minimized or even substantially eliminated. When the first rod is under strain of pressure, the second rod may be under strain of tension, or reverse. In practice the ring has a cylindrical inner shape in order to be rotatable about the circular member, but the outer circumference of the ring may have a different shape. In practice the circumferential outer shape may be rectangular or close to rectangular rather than circular.

An advantage of the feature that the outer circumference of the circular member extends beyond the outer circumference of the rotating shaft is that a cylindrical rotating shaft can be used. Compared to a conventional crankshaft, this is not only beneficial from point of view of torque transfer through the rotating shaft, but also from point of view of assembling the transmission mechanism. Both the ring and the circular member can be mounted to the rotating shaft by means of displacing the ring and the circular member over the rotating shaft along its centre line and fixing the circular member to the rotating shaft at their desired mutual positions. Furthermore, the circular member that is fixed to the rotating shaft provides a compact structure as seen in longitudinal direction of the rotating shaft.

In a simple practical embodiment the circular member comprises a disc. The disc may be provided with a recess which is located opposite to the axis of rotation with respect to the ring axis so as to balance the transmission mechanism. Additionally or alternatively, one or more additional discs including off centre counterweights may be mounted to the rotating shaft.

In order to minimize friction a bearing may be present between the ring and the circular member. Preferably the bearing comprises a ball bearing, which can be mounted in a relatively easy way since the outer circumference of the circular member extends beyond the outer circumference of the rotating shaft in at least one direction of the axis of rotation. Alternative bearings like needle or roller bearings are also conceivable.

At the two opposite rotational positions of the rotating shaft the plane through the first reciprocating member pivot axis and the first ring pivot axis as well as the plane through the second reciprocating member pivot axis and the second ring pivot axis may extend parallel to each other, This means that they lie at a distance from each other.

The first and second ring pivot axes may be located at different positions at the ring as defined in claims 6-8.

In a preferred embodiment the first ring pivot axis is located beyond the second ring pivot axis as seen from the front end to the rear end, since this provides the opportunity to build the mechanism in a compact way as seen in the axial direction of the reciprocating member. It is noted that this feature is independent from the feature in respect of the presence of a circular member about which the ring is rotatably mounted and of which the outer circumference extends beyond the outer circumference of the rotating shaft. In other words the invention is also related to:
A transmission mechanism, comprising
a rotating shaft having an axis of rotation,
a reciprocating member having a front end and a rear end in its axial direction, which reciprocating member is displaceable with respect to the axis of rotation in its axial direction extending perpendicularly to the axis of rotation,
a ring which is rotatably mounted to the rotating shaft and rotatable about a ring axis extending parallel to the axis of rotation,
a first rod which is pivotally coupled to the reciprocating member at a first reciprocating member pivot axis and to the ring at a first ring pivot axis,
a second rod which is pivotally coupled to the reciprocating member at a second reciprocating member pivot axis and to the ring at a second ring pivot axis,
wherein the first and second reciprocating member pivot axes and the first and second ring pivot axes extend in the same direction as the axis of rotation, and wherein the distances between the first reciprocating member pivot axis and the first ring pivot axis, on the one hand, and between the second reciprocating member pivot axis and the second ring pivot axis, on the other hand, are equal and larger than the distance between the axis of rotation and the ring axis, wherein the first ring pivot axis is located beyond the first reciprocating member pivot axis as seen from the front end to the rear end, and
wherein the second ring pivot axis is located beyond the second reciprocating member pivot axis as seen from the rear end to the front end,
wherein the mechanism is arranged such that at two opposite rotational positions of the rotating shaft in which the plane through the axis of rotation and the ring axis extends in axial direction, the plane through the first reciprocating member pivot axis and the first ring pivot axis and the plane through the second reciprocating member pivot axis and the second ring pivot axis extend in axial direction, as well, wherein the first ring pivot axis is located beyond the second ring pivot axis as seen from the front end to the rear end.

The invention will hereafter be elucidated with reference to drawings illustrating embodiments of the invention very schematically.
Fig. 1 is a perspective exploded view of an embodiment of the transmission mechanism according to the invention.
Fig. 2 is a side view of the embodiment of Fig. 1 in assembled condition.
Figs. 3 and 4 are similar views as Fig. 2, but showing different conditions of the transmission mechanism.
Figs. 5-7 are top views of the embodiment as shown in Figs. 2-4, respectively.
Figs. 8-10 are frontal views of the embodiment as shown in Figs. 2-4, respectively.
Figs. 11 and 12 are similar views as Figs. 2 and 3, on a larger scale, but showing a different embodiment.

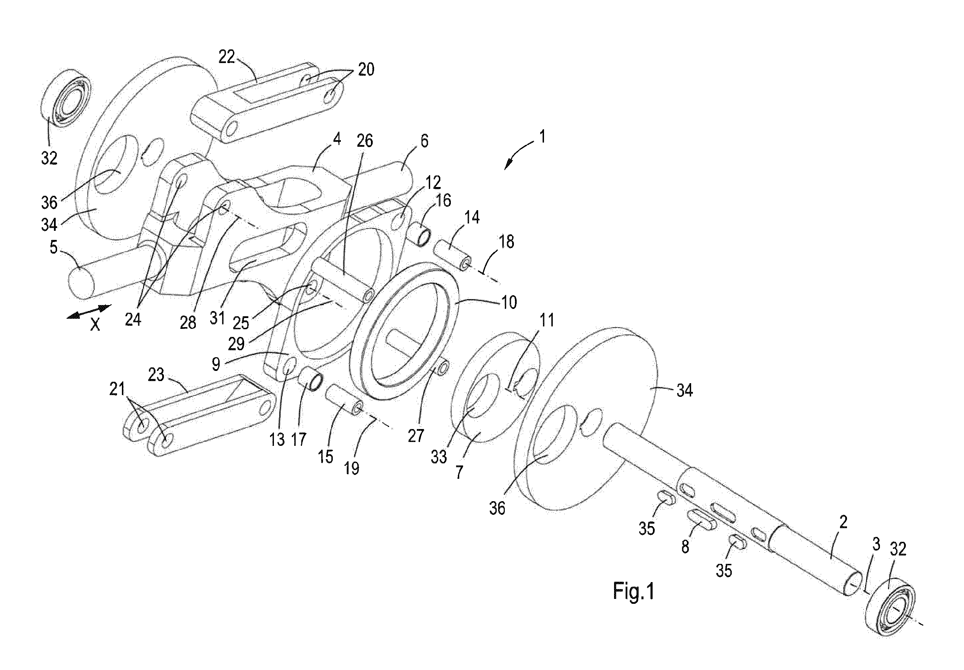

Fig. 1 shows an embodiment of a transmission mechanism 1 according to the invention in disassembled condition. The transmission mechanism 1 comprises a cylindrical rotating shaft 2 which is rotatable about an axis of rotation 3. The mechanism 1 is also provided with a reciprocating member 4 which has a front end 5 and a rear end 6 in axial direction X thereof. The front end 5 and the rear end 6 may comprise pistons (not shown), for example for use in a compressor or an internal combustion engine. The reciprocating member 4 is displaceable along a straight path with respect to the axis of rotation 3 in axial direction X which extends perpendicularly to the axis of rotation 3.

A circular disc 7 is fixed to the rotating shaft 2 by means of a key 8. In an alternative embodiment the circular disc 7 may be fixed to the rotating shaft 2 by means of a spline or the like. A ring 9 is rotatably mounted about the disc 7 through a ball bearing 10 and is rotatable about a ring axis 11. It is noted that a centre line of the disc 7 coincides with the ring axis 11. The disc 7 is disposed eccentrically with respect to the axis of rotation 3 such that the ring axis 11 extends parallel to, i.e. at a distance from, the axis of rotation 3. The inner wall of the ring 9 is cylindrical, but the outer circumferential wall of the ring 9 is rectangular with curved corners. It can be seen that the curvatures at two opposite corners in diagonal direction are smaller than at the other two opposite corners. It is noted that instead of the ball bearing 10 alternative bearings may be applied, for example a needle bearing or roller bearing.

The ring 9 is provided with a first ring hole 12 and a second ring hole 13. Two ring pins 14, 15 are mounted via respective bearings 16, 17 in the first and second ring holes 12, 13, respectively, such that the ring pins 14, 15 are rotatable with respect to the ring 9 about a first ring pivot axis 18 and a second ring pivot axis 19, respectively. The ring pins 14, 15 are fixed into holes 20, 21 of a first rod 22 and a second rod 23, respectively. Hence the first rod 22 is pivotally coupled to the ring 9 at the first ring pivot axis 18 and the second rod 23 is pivotally coupled to the ring 9 at a second ring pivot axis 19. In the embodiment as shown, the first and second ring pivot axes 18, 19 are located at opposite sides of the ring axis 11 and their positions are mirrored with respect to the ring axis 11. Furthermore, the first ring pivot axis 18 is located beyond the ring axis 11 as seen from the front end 5 to the rear end 6 and the second ring pivot axis 19 is located beyond the ring axis 11 as seen from the rear end 6 to the front end 5. Besides, the first ring pivot axis 18 is located beyond the second ring pivot axis 19 as seen from the front end 5 to the rear end 6.

The reciprocating member 4 is provided with first reciprocating member holes 24 and second reciprocating member holes 25 in which respective reciprocating member pins 26, 27 are fitted, possibly via respective bearings in the rods 22, 23 or in the reciprocating member 4 (not shown), such that the first rod 22 can be pivoted with respect to the reciprocating member 4 at a first reciprocating member pivot axis 28 and the second rod 23 can be pivoted with respect to the reciprocating member 4 at a second reciprocating member pivot axis 29.

In an alternative embodiment the first and second rods 22, 23 may be shaped differently. For example, each of the rods 22, 23 may comprise parallel bars which are kept at a fixed distance from each other by means of spacing sleeves at the first reciprocating member pivot axis 28 and the second reciprocating member pivot axis 29.

In the embodiment as shown in Fig. 1, the first reciprocating member pivot axis 28 and the second reciprocating member pivot axis 29 are located at a distance from each other in axial direction X as well as perpendicular thereto. Furthermore, the first and second reciprocating member pivot axes 28, 29 and the first and second ring pivot axes 18, 19 extend parallel to the axis of rotation 3.

The first rod 22 and the second rod 23 have the same length, such that the distance between the first reciprocating member pivot axis 28 and the first ring pivot axis 18 and the distance between the second reciprocating member pivot axis 29 and the second ring pivot axis 19 are equal. Furthermore, this distance is larger than the distance between the axis of rotation 3 and the ring axis 11.

Fig. 1 shows that the first ring pivot axis 18 is located beyond the first reciprocating member pivot axis 28 as seen from the front end 5 to the rear end 6 of the reciprocating member 4, and that the second ring pivot axis 19 is located beyond the second reciprocating member pivot axis 29 as seen from the rear end 6 to the front end 5.

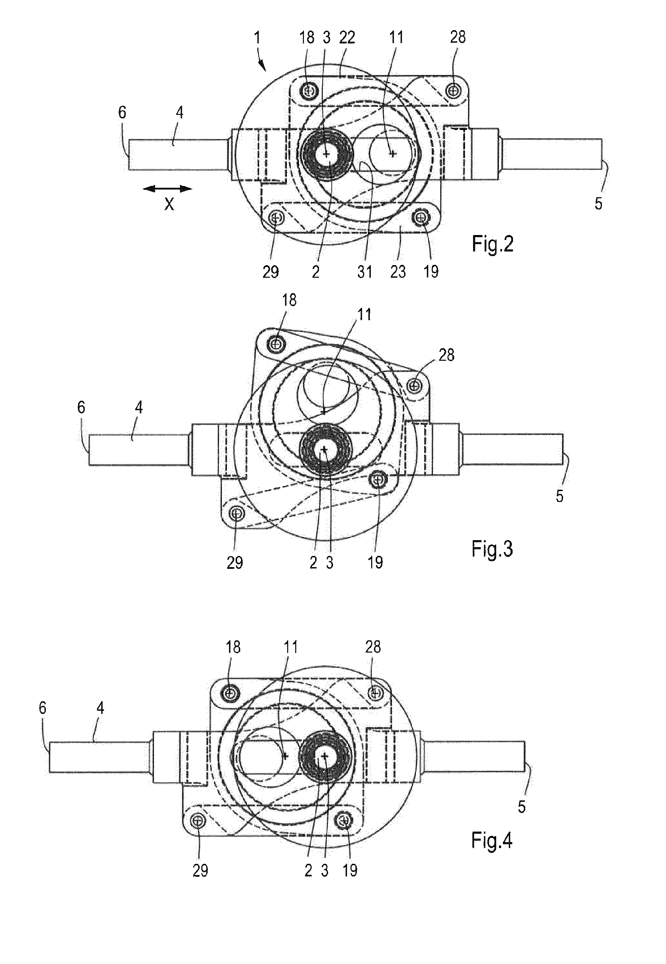

Figs. 2-4 illustrate different conditions of the transmission mechanism 1 under operating conditions. Fig. 2 shows a condition in which the front end 5 is at its top dead centre and the rear end 6 is at its bottom dead centre. Fig. 3 shows a condition in which the reciprocating member 4 is displaced in a direction from the front end 5 to the rear end 6. As a consequence, the rotating shaft 2 is rotated anti-clockwise and the first rod 22 and the second rod 23 are both rotated upwardly with respect to the first and second reciprocating member pivot axis 28, 29, respectively. In the condition of Fig. 3 the first rod 22 is under strain of pressure, whereas the second rod 23 is under strain of tension. This means that the transverse force of the first rod 22 onto the reciprocating member 4 is directed downwardly and the transverse force of the second rod 23 onto the reciprocating member 4 is directed upwardly.

Fig. 4 shows a next condition in which the front end 5 is at its bottom dead centre and the rear end 6 is at its top dead centre. In this condition the rotating shaft 2 has rotated further anti-clockwise with respect to the condition as shown in Fig. 3, and the first and second rods 22, 23 extend parallel to each other.

Figs. 2 and 4 show two opposite extreme positions of the reciprocating member 4 which correspond to two opposite rotational positions of the rotating shaft 2. In these positions a plane through the axis of rotation 3 and the ring axis 11 extends in axial direction X. The plane through the first reciprocating member pivot axis 28 and the first ring pivot axis 18 and the plane through the second reciprocating member pivot axis 29 and the second ring pivot axis 19 extend in axial direction, as well. In the condition as shown in Fig. 2 the ring axis 11 is located between the axis of rotation 3 and the front end 5, whereas in the condition as shown in Fig. 4 the ring axis 11 is located between the axis of rotation 3 and the rear end 6.

In the embodiment as shown in the figures, at two opposite rotational positions of the rotating shaft 2, the plane through the first reciprocating member pivot axis 18 and the first ring pivot axis 28 and the plane through the second reciprocating member pivot axis 29 and the second ring pivot axis 19 extend parallel to each other, which means that the planes extend at a distance from each other. Moreover, in the embodiment as shown the first and second rods 22 and 23 overlap each other in axial direction X.

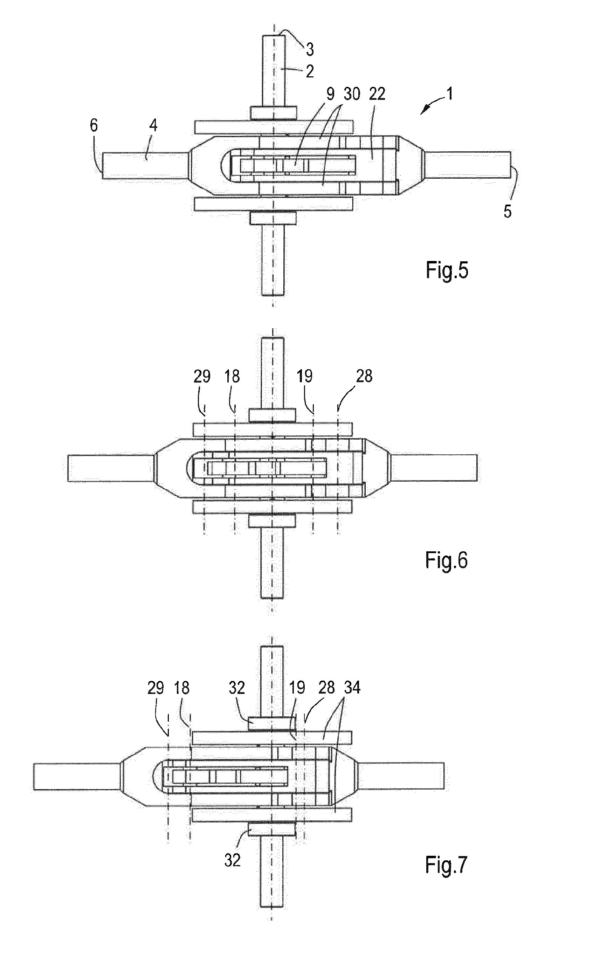

Figs. 5-7 show that the reciprocating member 4 is mirror symmetrical with respect to a plane which extends perpendicularly to the axis of rotation 3. The reciprocating member 4 comprises opposite side walls 30, between which the ring 9 including the bearing 10 and the disc 7 as well as the first and second rods 22, 23 are mounted. The side walls 30 are each provided with a through-hole in the form of a slot 31 which extends in axial direction X of the reciprocating member 4 through which the rotating shaft 2 extends. Upon assembling the transmission mechanism 1 the ring 9, the bearing 10 and the disc 7 can be fit to each other first and then placed between the opposite side walls 30, after which the first and second rods 22, 23 can be mounted to the ring 9 and the reciprocating member 4 by means of the reciprocating member pins 26, 27 and the ring pins 14, 15 including the respective bearings 16, 17, see Fig. 1. The assembly of the ball bearing 10 is possible since the outer circumference of the disc 7 extends beyond the outer circumference of the rotating shaft 2. This would be impossible if the rotating shaft 2 was shaped in the form of a conventional crankshaft including a crank arm.

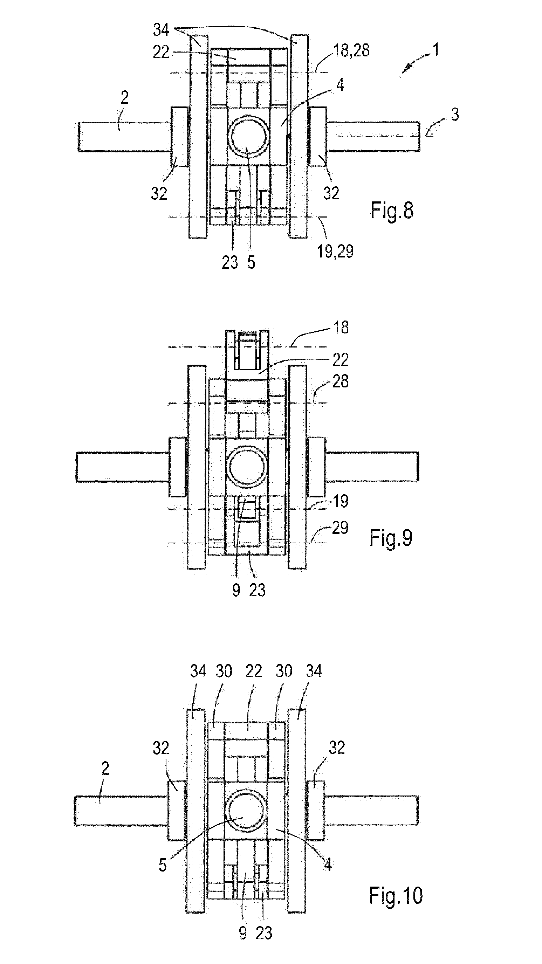

The frontal views in Figs. 8-10 illustrate that under operating conditions the first and second reciprocating member pivot axes 28, 29 remain at the same distance from a plane through the axis of rotation 3 in axial direction X, whereas the distances of the first and second ring pivot axes 18, 19 with respect to that plane vary.

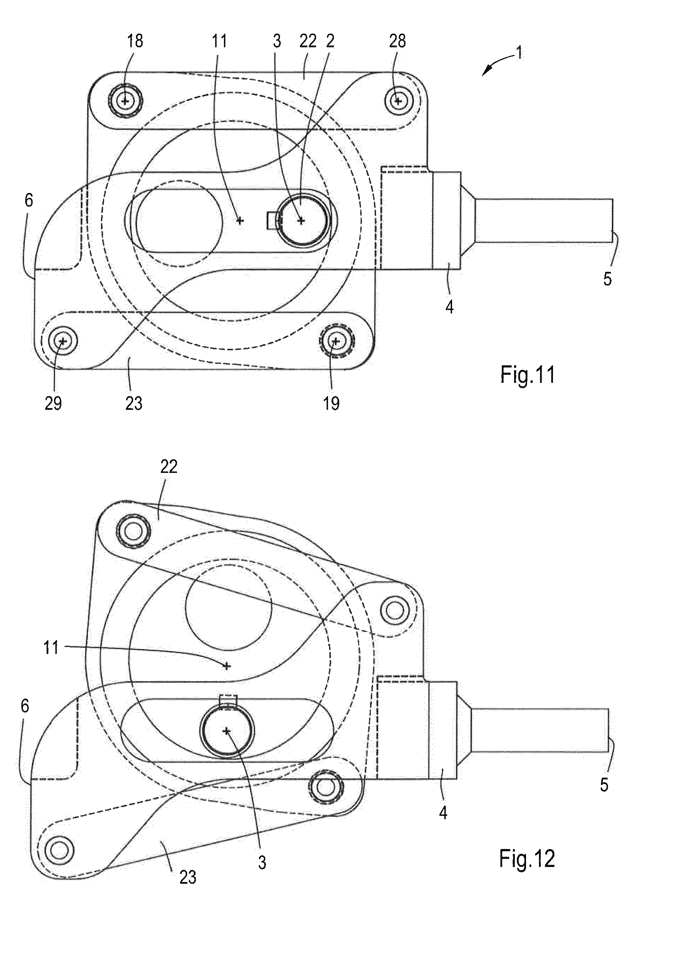

In the embodiment as shown in Figs. 1-10 the reciprocating member 4 is rotational symmetric about an axis parallel to the axis of rotation 3. As described hereinbefore the front end 5 and the rear end 6 may comprise pistons. Figs. 11 and 12 show an alternative embodiment of the transmission mechanism 1 in which the reciprocating member 4 comprises an alternative shape. In this case the front end 5 may be provided with a piston and the rear end 6 does not comprise a projection like the front end 5. Such an embodiment may be suitable for a single cylinder application.

Referring to Fig. 1 it can be seen that the rotating shaft 2 is supported by bearings 32 in a housing (not shown), for example a crankcase. In order to balance the transmission mechanism 1 the disc 7 is provided with a recess 33 which is located opposite to the axis of rotation 3 with respect to the ring axis 11. Furthermore, in the embodiment as shown, two counterweight discs 34 are fixed to the rotating shaft 2 by means of respective keys 35, but in alternative embodiments the counterweights may be omitted. The counterweight discs 34 are each provided with a recess 36 such that their centres of gravity are located opposite to the ring axis 11 with respect to the axis of rotation 3.

The invention is not limited to the embodiments as shown in the drawings and described hereinbefore, which may be varied in different manners within the scope of the claims. For example, the mechanism may be provided with one or more additional reciprocating members, located next to each other for multi-cylinder applications. In that case one or more additional discs may be fixed to a common rotating shaft,

## Claims

1. A transmission mechanism (1), comprising
a rotating shaft (2) having an axis of rotation (3),
a reciprocating member (4) having a front end and a rear end in its axial direction (X), which reciprocating member (4) is displaceable with respect to the axis of rotation (3) in its axial direction (X) extending perpendicularly to the axis of rotation (3),
a ring (9) which is rotatably mounted to the rotating shaft (2) and rotatable about a ring axis (11) extending parallel to the axis of rotation (3),
a first rod (22) which is pivotally coupled to the reciprocating member (4) at a first reciprocating member pivot axis (28) and to the ring (9) at a first ring pivot axis (18),
a second rod (23) which is pivotally coupled to the reciprocating member (4) at a second reciprocating member pivot axis (29) and to the ring (9) at a second ring pivot axis (19),
wherein the first and second reciprocating member pivot axes (28, 29) and the first and second ring pivot axes (18, 19) extend in the same direction as the axis of rotation (3), and wherein the distances between the first reciprocating member pivot axis (28) and the first ring pivot axis (18), on the one hand, and between the second reciprocating member pivot axis (29) and the second ring pivot axis (19), on the other hand, are equal and larger than the distance between the axis of rotation (3) and the ring axis (11),
wherein the first ring pivot axis (18) is located beyond the first reciprocating member pivot axis (28) as seen from the front end (5) to the rear end (6), and
wherein the second ring pivot axis (19) is located beyond the second reciprocating member pivot axis (29) as seen from the rear end (6) to the front end (5),
wherein the mechanism (1) is arranged such that at two opposite rotational positions of the rotating shaft (2) in which the plane through the axis of rotation (3) and the ring axis (11) extends in axial direction (X), the plane through the first reciprocating member pivot axis (28) and the first ring pivot axis (18) and the plane through the second reciprocating member pivot axis (29) and the second ring pivot axis (19) extend in axial direction (X), as well,
wherein a circular member (7) is attached to the rotating shaft (2) and located eccentrically with respect to the axis of rotation (3), and wherein the ring (9) is rotatably mounted about the circular member (7) such that the centre line of the circular member (7) coincides with the ring axis (11), and wherein the outer circumference of the circular member (7) extends beyond the outer circumference of the rotating shaft (2) in at least one direction of the axis of rotation (3).

2. A transmission mechanism (1) according to claim 1, wherein the circular member comprises a disc (7).

3. A transmission mechanism (1) according to claim 2, wherein the disc (7) is provided with a recess (33) which is located opposite to the axis of rotation (3) with respect to the ring axis (11).

4. A transmission mechanism (1) according to one of the preceding claims, wherein a bearing is present between the ring (9) and the circular member (7), preferably a ball bearing (10).

5. A transmission mechanism (1) according to one of the preceding claims, wherein at said two rotational positions the plane through the first reciprocating member pivot axis (28) and the first ring pivot axis (18) and the plane through the second reciprocating member pivot axis (29) and the second ring pivot axis (19) extend parallel to each other.

6. A transmission mechanism (1) according to one of the preceding claims, wherein the first and second ring pivot axes (18, 19) are located at opposite sides of the ring axis (11).

7. A transmission mechanism (1) according to one of the preceding claims, wherein the first and second ring pivot axes (18, 19) are located mirrored with respect to the ring axis (11).

8. A transmission mechanism (1) according to one of the preceding claims, wherein at least one of the first ring pivot axis (18) is located beyond the ring axis (11) as seen from the front end (5) to the rear end (6) and the second ring pivot axis (19) is located beyond the ring axis (11) as seen from the rear end (6) to the front end (5).

9. A transmission mechanism (1) according to one of the preceding claims, wherein the first ring pivot axis (18) is located beyond the second ring pivot axis (19) as seen from the front end (5) to the rear end (6).

10. A transmission mechanism (1) according to one of the preceding claims, wherein the reciprocating member (4) comprises a side wall (30) including a through-hole (31) through which the rotating shaft (2) extends.

11. A transmission mechanism (1) according to claim 10, wherein the through-hole comprises a slot (31) extending in axial direction (X) of the reciprocating member (4).

12. A transmission mechanism (1) according to one of the preceding claims, wherein the reciprocating member (4) is mirror symmetrical with respect to a plane which extends perpendicularly to the axis of rotation (3).
